# EUROPEAN PATENT SPECIFICATION

(11) **EP 2 366 916 B1**
(45) Date of publication and mention of the grant of the patent: **21.03.2012**
(21) Application number: 11155842.5
(22) Date of filing: 24.02.2011
(51) Int. Cl.: F16F 9/48, F16F 9/516

(54) **Damper**
Dämpfer
Amortisseur

(30) Priority: 08.03.2010 IT MI20100380
(43) Date of publication of application: 21.09.2011
(73) Proprietor: GUIROS S.R.L., 20823 Lentate Sul Seveso (Monza-Brianza) (IT)
(72) Inventor: Galli, Roberto, 20038, Seregno (Monza-Brianza) (IT)
(74) Representative: Petruzziello, Aldo

(56) References cited:
- EP-A1- 1 662 168
- EP-A2- 0 198 180
- DE-A1- 19 853 029
- US-A- 2 953 810
- US-A- 5 012 551
- US-A1- 2007 175 717

## Description

The present invention relates to a damper, particularly a damper which can be used for slowing down the opening or closing stroke of sliding doors, wings, such as closet and furniture wings, mobile systems for entering rooms, sliding partitions, drawers, and the like.

As it is known, dampers are today common and widely used on the market, which are mounted in devices or mechanisms for opening doors or wings, particularly furniture, the dampers being placed in such a way to slow down the opening and/or closing stroke of the sliding element near the end of stroke thereof, to avoid the sliding element (or also the movement mechanism) to undergo blows when the sliding element abuts against the frame during the mentioned opening and closing operations.

In general (but not necessarily), the dampers are mounted on the fixed frame carrying and guiding the sliding element, and cooperate with this latter at the final closing/opening steps thereof.

In detail, when the sliding wing or door arrives near the end of stroke, it cooperates with the piston (or the cylinder) of the loaded damper, which slows down the stroke of the sliding element, due to the friction generated inside the cylinder during the piston movement, which is particularly connected to the backflow of the oil contained in the inner chamber of the piston.

In other words, the dampers according to the prior art consist of a cylinder inside which a piston can substantially seal slide on the cylinder, the piston compressing a fluid, typically oil; following the pressure increase, the oil begins to seep through a small interspace formed between the piston outer surface and the cylinder inner surface. Working in this way, the damper slows down the stroke of the sliding element and deadens any blows between the frame and the sliding element.

It is apparent that, although the closing stroke of the piston aims the object to slow down the movement of the sliding element, vice versa its reset has, in general, to occur quickly in order to guarantee that the damper is in a loaded state to damp a new and possible sudden closing/opening of the sliding element.

To solve the above-mentioned problem, they are available and well-known in literature (see, for example, patents ns. WO 2008050989, US 2006207843, WO 2007099100, US 2007175717) pistons provided with a structure and geometry such to allow a resistance to motion during the damping step (in closure) greater than the resistance generated by the oil backflow during the reset step. In this manner, the damper guarantees an optimum behavior in the opening/closing steps of the wing and a quicker reset of the damper for a new operation.

DE 19853029 A1 discloses a damper comprising a cylinder which is divided into two working chambers by a piston and a piston rod. A fluid connection is provided between the two working chambers, which can be blocked by a valve unit formed by two valve groups which influence the fluid flow between the chambers in both directions.

However, it is necessary to notice that the structures described, for example, in the above mentioned patents are extremely complex from the constructive point of view, since they consist of a plurality of mutual mobile elements and imply increased manufacturing and assembling costs, as well as a decreased reliability of the device.

To overcome the above mentioned drawbacks, EP 0198180 discloses a damper, particularly for the hatch-back door of a vehicle, comprising a cylindrical fluid-filled housing and a piston movable in the housing. The piston consists of two parts, i.e. a piston carrier, fixedly connected to the piston rod, and a piston ring, made of elastic material, which abuts in a guiding matter on the inner wall of the housing. The piston ring can move axially relative to the piston rod between two stops formed in the piston carrier, specifically, between a damping condition, wherein the fluid flows through a passage defined between the piston ring and the piston carrier and between the piston carrier and the cylindrical housing and a second spaced condition, wherein the fluid can flow through openings having minor resistance to the fluid passage.

This latter technical solution is disadvantageous, in that the piston ring moves between the two stops being always into contact with the inner surface of the housing, this causing the piston to become seized. Moreover, being the ring piston made of elastic material, it can wear, thus requiring a replacement thereof.

A further enhancement of the above mentioned device is also known from EP 1563763, wherein the piston consists again of only two elements movable one with respect to the other.

The first element constrained to the piston rod has a head portion peripherally provided with four chamfers suitable for creating preferential paths for the oil; this first element continues in the axial direction with a shank integral with the above mentioned portion, but having a reduced cross-section and terminating with a plurality of elastic hooks.

A hollow cylinder engages in the annular seat defined between the head of the piston and the elastic elements, which axially extends less than the seat. In the damping condition, the hollow cylinder abuts against the head portion of the piston, thereby occluding the cited preferential passages for the oil and thus offering a higher resistance to motion; vice versa, in the reset condition, this cylindrical element is held between the cited elastic elements, but spaced from the main portion of the piston, thereby less resistance oil passages being defined, and therefore the setup being carried out quickly.

However, also this latter type of dampers present some drawbacks and/or operative limits and can be therefore enhanced in some aspects.

First, although it consists exclusively of two elements movable one with respect to the other, the piston structure is in any case still geometrically complex. Moreover, the piston has a guiding surface (head portion) which is complementary shaped to the inner wall of the cylinder with reduced axial development, and therefore a risk exists to generate oscillations or vibrations, in particular in the event of small misalignments of the cylinder rod.

Moreover, these misalignments could cause oil leakages and therefore reduce the operation of the damper, which could quickly discharge, this requiring a replacement thereof.

Further, the effect of resistance to motion during the closing steps clearly increases as the pressure generated within the chamber containing the oil increases.

In some situations, this pressure is such to not permit the complete closing/opening of the sliding wing/door.

The object of the present invention is substantially to solve the above mentioned drawbacks.

The first object of the invention is to provide an extremely simple and functional alternative embodiment of a piston which allows an optimized damping effect in the closing direction and a quick reset.

Another object of the invention is to limit the possibility of oil leakages, which can compromise the good functionality or the working life of the damper.

An auxiliary object of the invention is to provide a damper structure suitable for allowing the complete closing/opening of the sliding element in any operating condition.

Another object of the invention is to provide a damper so shaped to allow an easy assembling and disassembling of all its components.

These and other objects, which will better appear in the following of the present specification, are substantially obtained by means of a damper according to the appended claims.

Further characteristics and advantages will be more detailed with reference to a preferred, but not exclusive, embodiment according to the following specification.

This specification is provided below with specific reference to the enclosed illustrative and not limiting drawings, wherein:
- Figure 1 is an exploded view of a damper according to the present invention;
- Figure 2 is a longitudinal section of a damper according to the present invention in a operating condition;
- Figure 3 is a longitudinal section of the device of Figure 1 in a further operating condition;
- Figure 4 is an exploded view of a detail of the damper according to the invention;
- Figure 5 is an enlarged, partial sectional view of a piston of the damper of the previous Figures;

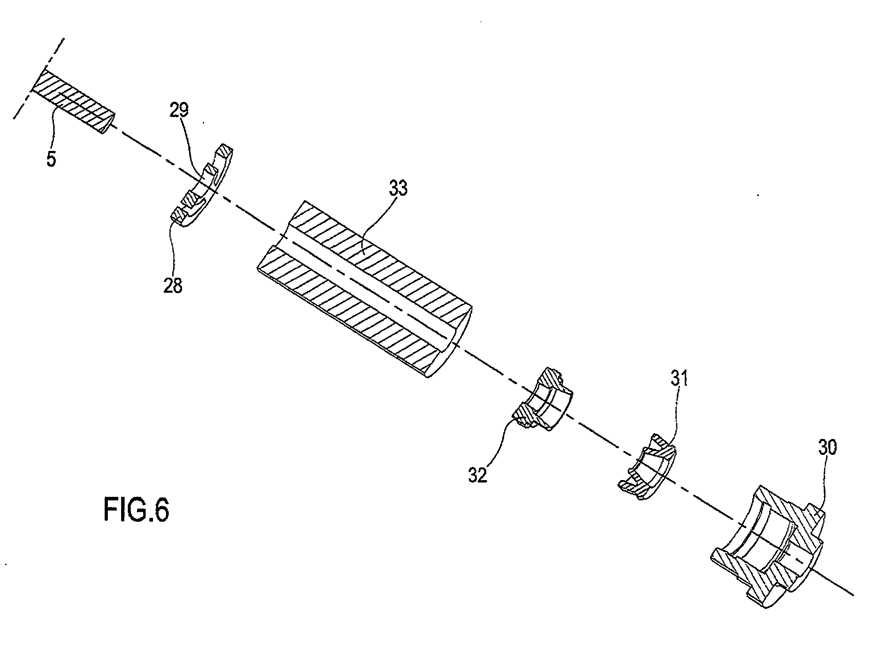

- Figure 6 is an enlarged, partial sectional view of the head of the damper of the previous Figures; and
- Figure 7 is an enlarged, partial sectional view of the end area of the cylinder of the previous Figures.

With reference to the above listed Figures, the damper according to the invention is indicated in general with the reference numeral 1.

In particular, it has to be noticed that the damper described below is particularly suitable for damping the main motion during the closing and/or opening steps of sliding doors, sliding wings, mobile walls, drawers or, generally, furniture, wherein there is an element which moves with respect to a fixed frame and whose movement has to be slowed down in order to avoid blows to the structure.

As it is possible to notice from the appended Figures, the damper according to the invention comprises first of all a sleeve 2, generally defined by a tubular cylindrical body, which, in use, is closed at both the ends thereof.

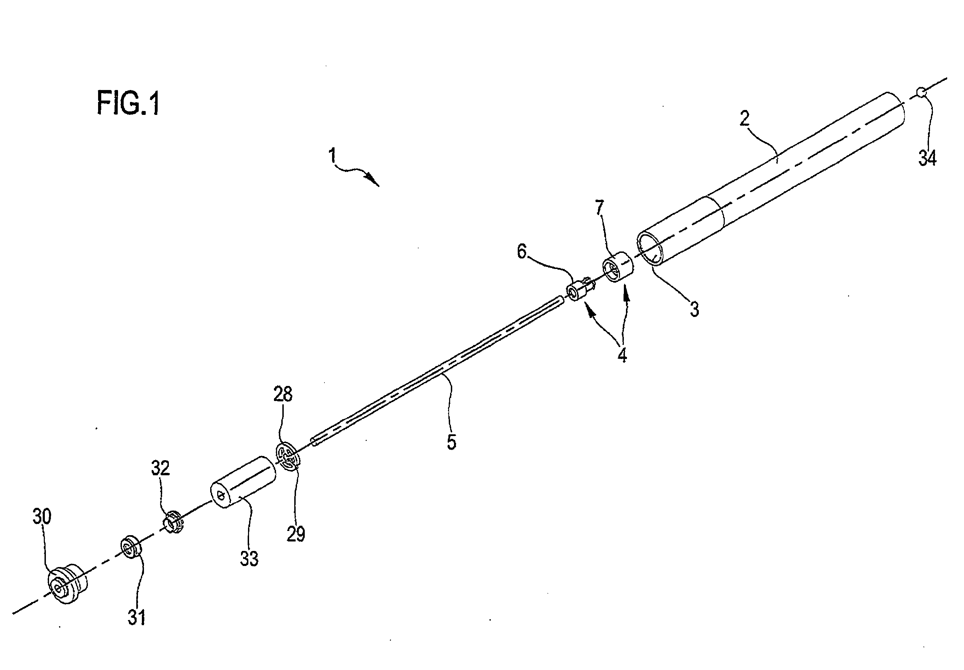

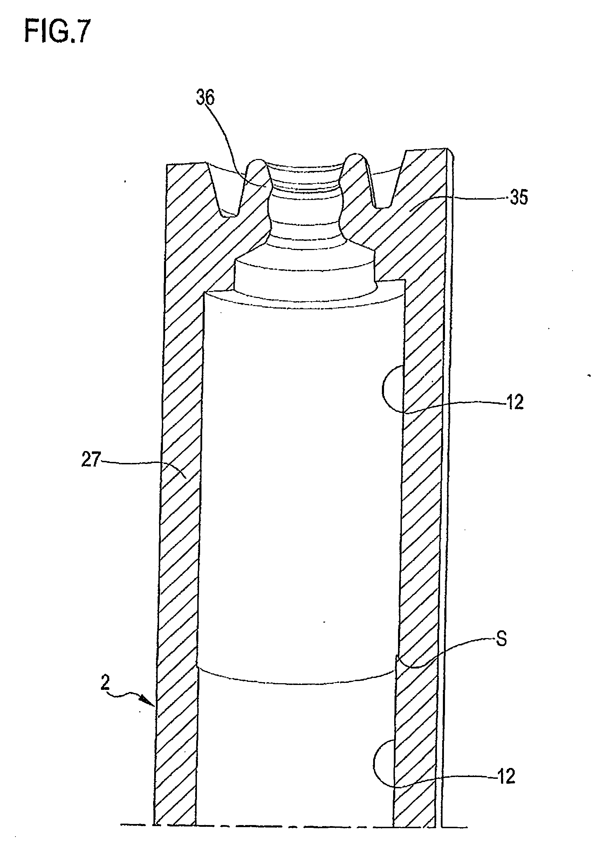

In particular, at a first end 27 thereof (clearly visible in Figure 7) a suitable shaping 35 is present, which defines a seat 36 adapted to house the ball 34 shown, for example, in Figure 1.

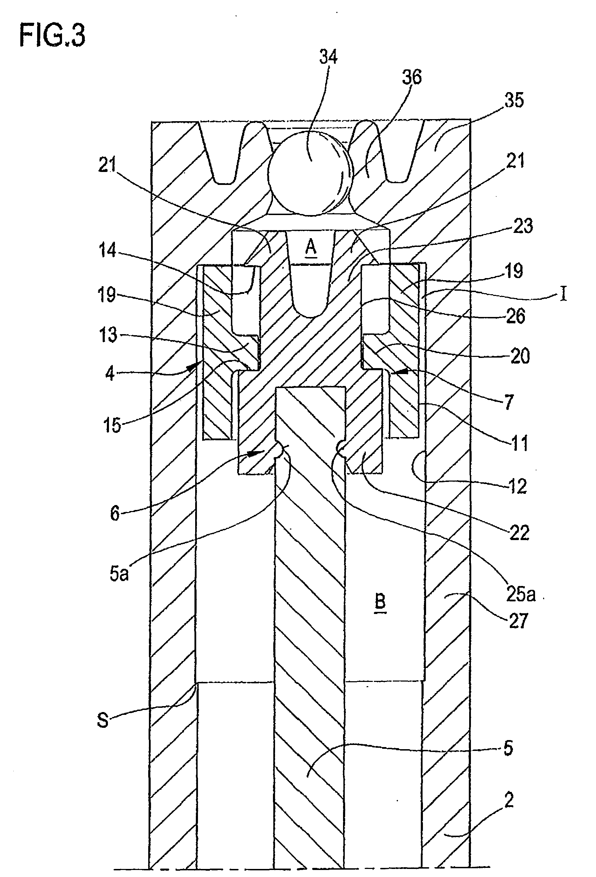

In the assembled configuration, visible in Figure 3, it is shown how any backflow of fluid (in particular oil) contained within the cylinder of sleeve 2 is prevented.

At the opposite side of the cylinder, an upper plug 30 is present (see Figure 1) designed to liquid tight coupling to the upper inner surface of the cylinder.

In particular, the upper plug 30 has a through seat suitable for housing a stem 5 of the damper and to ensure a fluid tight during the motion by means of a suitable seal 31, which is held into position by a washer 32 for the previously cited plug 30; a sponge 33 is also present, having functions known in the dampers present on the market.

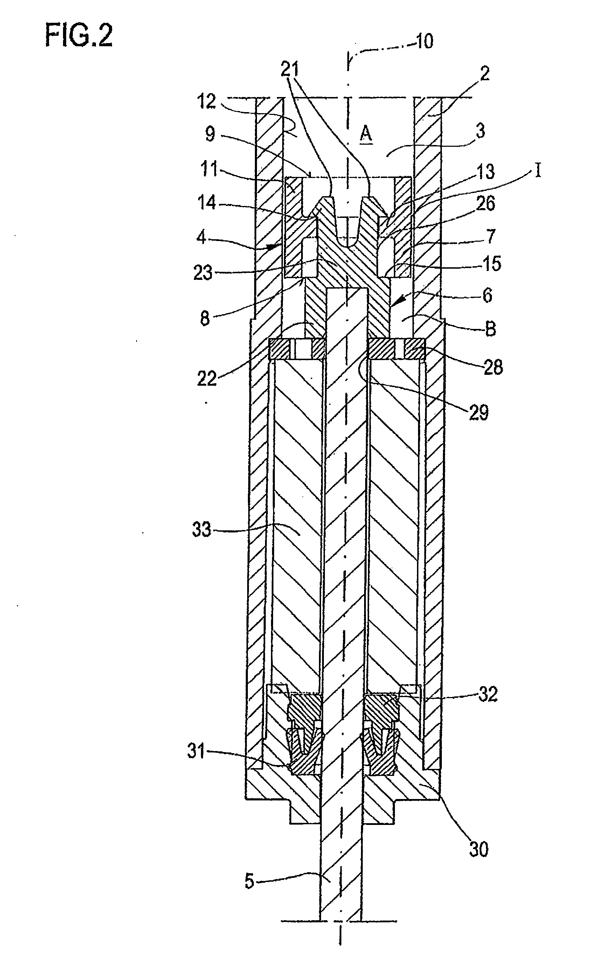

These elements are shown in exploded view in Figure 1 and in assembled condition in Figure 2.

As cited, the damper according to the invention is designed to house within the housing cavity 3 at least one fluid which is destined to interact and cooperate with the piston 4 to define the various motion conditions of the damper, as it will better appear below.

In particular, this fluid is in general oil, even if other liquids/gases will be able to be used, as needed.

Therefore, the damper according to the invention has also the above mentioned stem 5 bearing the piston 4 to move it within the housing cavity 3; the stem results partially housed in the cavity 3, in particular it will be substantially and almost completely housed in the closed configuration shown in Figure 3 and, vice versa, substantially outside the housing cavity 3 in the configuration shown in Figure 2.

The piston 4 is generally mounted at a free end of the stem 5 (even if not necessarily).

Passing to observe the structure of the piston 4, it is first noticed how it consists of a first body 6, movable within the cavity 3, but integral with the stem 5. Preferably, the first mobile body 6 is made of plastic material.

In particular, it will be able to be glued or interference fitted in the end portion of the stem 5 in such a way to remain rigidly constrained therein.

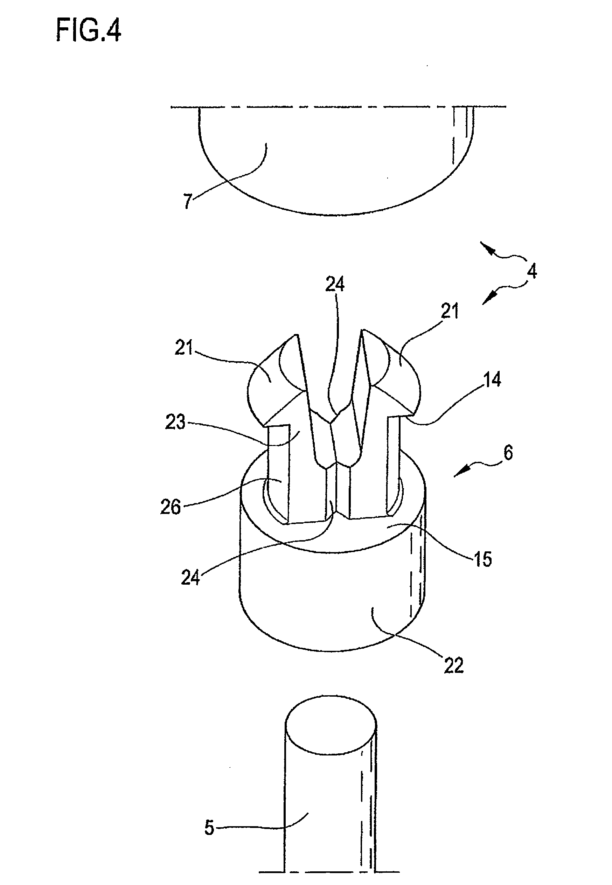

The first mobile body 6 is clearly shown in Figure 4 and first comprises a first portion 22, preferably cylindrical in shape, which is designed to couple to the stem 5 at one end thereof.

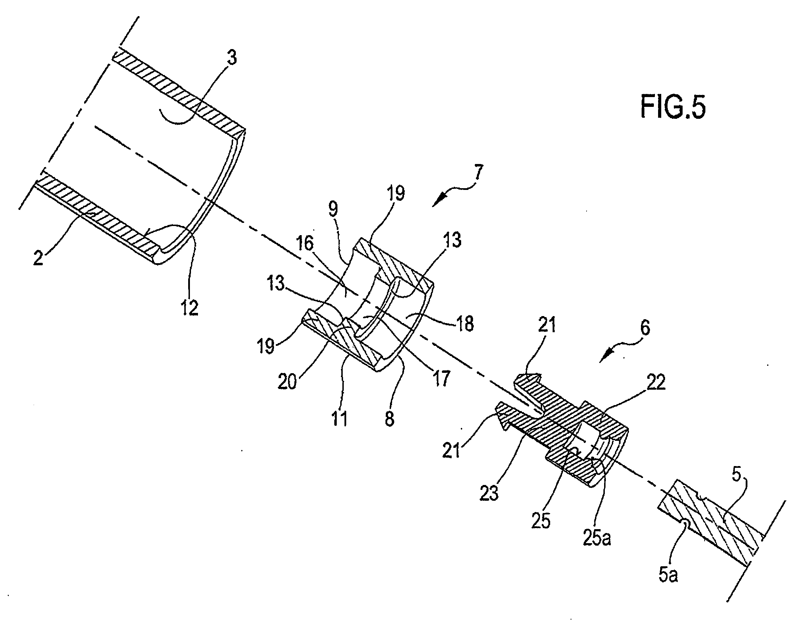

To this end, also observing Figure 5, it is noticed the presence of a blind seat 25 designed to engage the terminal end of the stem 5. An annular groove 5a is, preferably, formed at the terminal end of the stem 5, which is suitable for snap-engaging with a respective annular rim 25a formed in the blinds seat 25 of the first mobile body 6.

A coupling portion 23 is constrained to, and in general integral with the portion 22, the coupling portion 23 comprising a predetermined number of elastic elements 21 generally in the form of teeth carried by adapted elastic arms.

The embodiment illustrated provides to adopt two teeth symmetrically placed with respect to the longitudinal axis 10 of the device.

How it can be seen in the Figures (see for example Figure 2) the cylindrical portion 22 has a diameter lower than the diameter of the sleeve 2.

In other words, a distance at least equal to the thickness of a side wall of the second mobile body 7 is present between the outer surface of the cylindrical portion 22 and the inner surface 12 of the sleeve 2, as it will be better understood below.

Following the coupling between the cylindrical portion 22 and the coupling portion 23, a second annular-shaped abutment surface 15 is defined (see Figure 4), which is opposite to a first abutment surface 14 defined by the teeth of the elastic elements 21.

A rectilinear section 26 is interposed between the two abutment surfaces 14, 15.

With further reference to Figure 4, a pair of axial (parallel to the longitudinal axis 10) grooves, for example triangular in cross-section, can be noticed.

As described in greater detail below, these grooves will help to define a passage port in one of the operative conditions of the piston.

A volume is then geometrically present between the two opposite teeth 21, which ensures a free deformation of the teeth to engage the second mobile body 7, during assembly.

It is noticed that also the second coupling portion 23 has a radial bulk lower than the radial bulk of the sleeve 2.

In other words, during the sliding stroke within the housing cavity 3, the first mobile body 6 does not touch neither is substantially counter-shaped to the inner surface 12 of the sleeve 2 (see Figure 2 or Figure 3).

With reference to the second mobile body 7, forming the piston 4, it is noticed how it has a tubular structure presenting a first and a second inlet 8, 9, which are opposite along the longitudinal axis 10 of the mobile body (Figure 5). Preferably, the second mobile body 7 is made of plastic material.

The second mobile body 7 first has a side outer surface 11, which is cylindrical in shape and mates the inner surface 12 of the cylinder 2. Specifically, between the side outer surface 11 of the second mobile body 7 and the inner surface 12 of the sleeve 2 an interspace 1 is formed (Figure 3), substantially small as desired, whose function will appear clearer in the following of the present description.

During the sliding of the piston within the housing chamber 3, substantially only the cylindrical wall 11 is guided by the housing chamber 3.

In particular, the tubular structure of the second body 7 comprises a first hollow portion 16, starting from the second inlet 9 and ending in an intermediate area of the same structure.

This hollow portion 16 (generally having circular cross section and cylindrical extension) is adapted to be slidingly crossed by the first abutment surface 14.

In other words, the elastic elements 21, when into position (see Figures 2 and 3) can move from an area external to the second inlet 9 to a condition wherein they are completely housed within the first hollow portion 16, thus taking the first abutment surface 14 in abutment against an undercut 13 inside the second mobile body 7.

This tubular structure also has a second hollow portion 17 with a reduced cross-section with respect to the first portion 16 (also in this case the cross-section will be circular and with a cylindrical extension).

This reduced section of the second hollow portion 17 is defined at an undercut 13 delimited by an annular rim integrally placed within the tubular structure.

A third hollow portion 18 is then present, opposite placed with respect to the first portion 16 and so sized to be able to crossing receive the second abutment surface 15 of the first mobile body 6, until allowing it to abut against the undercut 13.

Also in this case, the second abutment surface 15 and at least one part of the cylindrical portion 22 can move from an area external to the first inlet 8 up to the undercut 13.

With reference to Figure 5, it is noticed that the second mobile body 7 is defined by two longitudinal portions 19 defining the rectangular tracks, whose extension defines the outer surface 11 placed within the housing cavity 3, and the inner surface facing the first and second hollow portions 16, 18, and by two central portions 20 internal to the tubular cavity, which define the track of the undercut 13.

In other words, the second mobile body 7 has a cylindrical symmetry, wherein the undercut is defined by the cited inner annular portion projecting from the tubular structure.

The first and/or the second and/or the third hollow portions 16, 17, 18 have a cylindrical geometry and, in grater detail, the first and the third portions 16, 18 have substantially identical transversal dimensions (in the specific case, also substantially coincident axial dimension, thereby maintaining the greatest geometry that better behaves in the presence of stresses and deformations).

Passing now to describe the operating conditions of the damper, it is noticed the following.

The first and second mobile bodies 6, 7 slide one with respect to the other in such a way to assume a plurality of different operating conditions, two of which are substantially stable and defined by the closing motion condition of the damper and the opening motion condition thereof.

In general, the piston 4 is arranged movable within the housing cavity 3 and defines two chambers A, B within the sleeve 2 which are separated by the piston 4.

In the first operating condition taken by the piston 4 when it moves within the housing cavity 3 according to a first movement direction (specifically a movement direction coming from the configuration of Figure 2 to that of Figure 3, i.e. an insertion of the stem in the housing cavity 3) the piston 4 substantially occludes a passage port between the two chambers A, B and the fluid (in general incompressible oil) can flow from a chamber to the other only by seeping through the interspace I formed between the side outer surface 11 of the second mobile body 7 and the inner surface 12 of the sleeve 2.

As it can be understood, these two surfaces are not sealed and the presence of the interspace I advantageously ensures an effect of damping or resistance to the motion in the closing direction of the damper.

In other terms, when the piston is pressed into the housing cavity 3, i.e. towards the chamber A, the oil contained therein increases its pressure and begins to seep, with resistance, through the interspace I defined between the two surfaces of the piston and the cylinder.

Obviously, the backflow dissipates energy and permits to damp the possible closure of a sliding element with respect to a fixed frame.

The first and second mobile bodies 6, 7 assume a configuration illustrated in Figure 3, wherein the second mobile body 7 abuts against the first mobile body 6 at the second abutment surface 15 cooperating with the undercut 13.

As mentioned above, in such operating configuration of the two mobile bodies 6, 7, the sole passage port permitted for the oil is that defined between the inner surface 12 of the cylinder 2 and the outer surface 11 of the second mobile body 7.

No passage, or substantially a negligible passage of fluid is possible between the first an second inlets 8, 9 of the tubular structure of the second mobile body 7.

On the contrary, in the second operating condition of the piston 4, when the motion into the housing cavity 3 is carried out in a second motion direction opposite to the first one (condition of reset from the position of Figure 3 to that of Figure 2), the first and second bodies 6, 7 define at least one passage port between the two chambers A, B through the first and the second inlets 8, 9 of the tubular structure of the mobile body 7.

In this second operating condition, visible in Figure 2, the first abutment surface 14 defined by the elastic elements 21 cooperates with the undercut 13 at a surface thereof opposite to that of cooperation between the second abutment surface 15 and the undercut highlighted in Figure 3.

In particular, starting from the configuration of Figure 3, the stem 5 tends to outcome from the housing chamber 3 moving in the direction from the chamber A to the chamber B.

The first mobile body 6 slides with respect to the second mobile body 7 until the first abutment surface 14 abuts against the undercut 13 and begins to drag also the second mobile body 7.

In this second operating condition, shown in Figure 2, passage ports open between the second inlet 9 and the first inlet 8 of the tubular structure of the second mobile body 7.

In particular, these passage ports are defined by the distance between the section 26 of the coupling portion and the inner surface of the second mobile body 7, by the axial grooves 24 and thus by the volume present between the elastic elements 21, and thus the first hollow portion 16.

In other words, the chambers A and B can communicate, not only through the small interspace I present between the outer surface 11 and the inner surface 12, but mainly through the passage ports defined by the cooperation between the two mobile elements 6, 7.

In this manner, the resistance to motion results lower in the reset movement of the damper than in the working one.

Therefore, applied force being equal, the motion from the configuration of Figure 2 to that of Figure 3 is slower than that from the condition of Figure 3 to that of Figure 2.

With reference, now, to Figure 7, it is noticed that the sleeve 2 comprises an end portion 27 having a cylindrical inner surface with a diameter greater than the diameter of the remaining portion of the sleeve 2.

In particular, an undercut S is shown, which defines a section coarsening of the housing cavity 3.

During the closing motion (from the condition of Figure 2 to that of Figure 3) the piston 4 meets a certain (high) resistance to motion, when it slides within the sleeve 2, caused by the cited backflow between the outer surface 11 and the inner surface 12 above mentioned.

However, when the piston 4 reaches the undercut S, the interspace I defined between the outer surface 11 of the second mobile body 7 and the inner surface 12 of the cylinder 2 increases, thus reducing the resistance to motion.

In this manner, in the last portion of the stroke of the damper, the motion resistance decreases, thereby ensuring the optimum closing/opening of the sliding element.

It is noticed that this latter characteristic is extremely advantageous and important, irrespective of the specific configuration of the piston.

The invention achieves important advantages.

First, the particular configuration in two bodies of the piston allows to obtain an extremely simple geometry and reduced production costs.

The second mobile body 7 slides along the inner surface of the cylinder thereby allowing an extremely accurate linear motion.

On the contrary, the first mobile body 6 only couples to the second mobile body 7 and does not contribute to guide the motion of the stem 5.

In this manner, small misalignments or vibrations of the stem 5 little affect the sliding of the piston 4 within the housing chamber 3, thereby ensuring an improved movement of the piston 4 with respect to that of the prior art.

In any case, to avoid misalignments of the stem, the above mentioned washer 28 is also present, which avoids small backflows of oil to be generated outside the damper.

Further, due to the presence of the interspace I formed between the side outer surface 11 of the second mobile body 7 and the inner surface 12 of the sleeve 2, the piston 4 never comes into contact with the inner surface 12 of the sleeve 2. This advantageously avoids piston seizure during its movement inside the sleeve 2.

Moreover, the presence of an end portion of the cylinder having a greater section ensures the desired opening/closing conditions of the mobile element with respect to the fixed frame to be obtained in substantially any operating condition and avoids the troublesome behavior of the dampers according to the prior art, which allow the complete closing/opening of the mobile structure by means of a second operator's action.

Finally, being both the first and second mobile bodies 6 and 7 made of plastic material, the working life of the piston is enhanced.

## Claims

1. A damper comprising:
- a sleeve (2) defining an housing cavity (3),
- a stem (5) at least partially housed in the cavity (3);
- a piston (4) borne by the stem (5) and movable in the housing cavity (3) thereby defining in the sleeve (2) two chambers (A, B); and
- at least one fluid contained in the sleeve (2) and adapted to cooperate with the piston (4);
wherein said piston (4) comprises a first mobile body (6) fixed to the stem (5), and a second mobile body (7), which is movable with respect to the first mobile body (6) in order to define first and second operating conditions of the piston (4);
wherein the second mobile body (7) has a tubular structure with an outer side surface (11) and an undercut (13) projecting inwardly from the tubular structure;
wherein the first mobile body (6) has opposite first and second abutment surfaces (14, 15), which cooperate with said undercut (13) formed in the second mobile body (7);
**characterized in that**
- the first mobile body (6) has a radial bulk smaller than the radial bulk of the sleeve (2) and comprises a first cylindrical portion (22) having a lower diameter than that of the sleeve (2) and defining the second abutment surface (15) and a second coupling portion (23) having a predetermined number of elastic elements (21) destined to define the first abutment surface (14), said elastic elements (21) being deformable in order to allow the first mobile body (6) to be slidingly snap engaged within the second mobile body (7), and
- an interspace (I) is defined between the outer side surface (11) of the second mobile body (7) and an inner surface (12) of the sleeve (2) such that in the first operating condition, at which the undercut (13) abuts against the second abutment surface (15), the piston (4) occludes a passage port between the two chambers (A, B), defined from the first and second mobile bodies (6, 7), and the fluid is able to backflow from a chamber to the other through said interspace (I), whereas in the second operating condition, in which the undercut (13) abuts against the first abutment surface (14), the passage port between the two chambers (A, B) is open and the fluid is able to flow through the tubular structure of the second mobile body (7) and through the interspace (I).

2. A damper according to claim 1, wherein the side outer surface (11) of the second mobile body (7) is substantially complementary shaped to the inner surface (12) of the sleeve (2) and the tubular structure of the second mobile body (7) has first and second inlets (8, 9) opposite with respect to the longitudinal axis (10) of the second mobile body (7) and in fluid communication.

3. A damper according to claim 1 or 2, wherein the tubular structure of the second mobile body (7) comprises a first inner hollow portion (16) so sized to be able to crossing receive the first abutment surface (14) up to abut the undercut (13), a second hollow portion (17) having a smaller section than the first portion (16) for preventing a crossing by the first abutment surface (14), and a third hollow portion (18) so sized to be able to crossing receive the second abutment surface (15) up to abut the undercut (13), the second hollow portion (17) having a cross-section such that it does not allow a crossing by the second abutment surface (15).

4. A damping according to claim 3, wherein the first hollow portion (16) and the third hollow portion (18) of the second mobile body (7) have substantially coincident transversal and longitudinal dimensions, thereby avoiding the second mobile body (7) to deform in the event of stress.

5. A damper according to any one of the preceding claims, wherein said elastic elements (21) consist of two opposite teeth carried by elastic arms.

6. A damper according to any one of the preceding claims, wherein the second coupling portion (23) has a predetermined number of axial grooves (24) destined to define portions of the passage port in the second operating condition of the piston (4).

7. A damper according to any one of the preceding claims, wherein the first cylindrical portion (22) has a blind seat (25) adapted to receive with interference fit a terminal end of the stem (5).

8. A damper according to claim 7, wherein an annular groove (5a) is formed at the terminal end of the stem (5) suitable for snap-engaging a respective annular rim (25a) formed in the blind seat (25) of the first mobile body (6).

9. A damper according to any one of the preceding claims, wherein the sleeve (2) comprises an end portion (27) having a inner surface with a larger diameter than the diameter of the remaining part of the sleeve (2), the piston (4), when sliding in said end portion (27) of the sleeve (2), encountering a motion resistance which is smaller than a sliding resistance of the piston (4) in the remaining part of the sleeve (2).

10. A damper according to any one of the preceding claims wherein both the first mobile body (6) and the second mobile body (7) are made of plastic material.

## Patentansprüche

1. Dämpfer, umfassend:
- eine Hülse (2), welche einen Gehäuseraum (3) definiert;
- einen Stab (5), welcher wenigstens teilweise im Gehäuseraum (3) aufgenommen ist;
- einen Kolben (4), welcher vom Stab (5) getragen wird und welcher im Gehäuseraum (3) bewegbar ist, wodurch in der Hülse (2) zwei Kammern (A, B) definiert werden; und
- wenigstens ein Fluid, welches in der Hülse (2) enthalten ist und welches so ausgelegt ist, um mit dem Kolben (4) zusammen zu wirken;
wobei der Kolben (4) einen ersten beweglichen Körper (6), welcher am Stab (5) befestigt ist, und einen zweiten beweglichen Körper (7) umfasst, welcher in Bezug auf den ersten beweglichen Körper (6) beweglich ist, um einen ersten und um einen zweiten Betätigungszustand des Kolbens (4) zu definieren;
wobei der zweite bewegliche Körper (7) eine rohrförmige Struktur mit einer äußeren Seitenfläche (11) und eine Hinterschneidung (13) aufweist, welche nach innen von der rohrförmigen Struktur vorragt;
wobei der erste bewegliche Körper (6) gegenüber liegende erste und zweite Anschlagflächen (14, 15) aufweist, welche mit der Hinterschneidung (13) zusammenwirken, die im zweiten beweglichen Körper (7) ausgebildet ist;
**dadurch gekennzeichnet, dass**
- der erste bewegliche Körper (6) eine radiale Masse aufweist, welche kleiner ist als die radiale Masse der Hülse (2), und einen ersten zylindrischen Abschnitt (22), welcher einen kleineren Durchmesser aufweist als jenen der Hülse (2) und welcher eine zweite Anschlagsfläche (15) definiert, und einen zweiten Kapplungsabschnitt (23) umfasst, welcher eine vorbestimmte Anzahl von elastischen Elementen (21) aufweist, die dazu bestimmt sind, die erste Anschlagfläche (14) zu definieren, wobei die elastischen Elemente (21) verformbar sind, um dem ersten beweglichen Körper (6) zu ermöglichen, gleitend mit dem zweiten beweglichen Körper (7) einrastend in Eingriff zu gelangen, und
- ein Zwischenraum (I) zwischen der äußeren Seitenfläche (11) des zweiten beweglichen Körpers (7) und einer inneren Oberfläche (12) der Hülse (2) definiert ist, so dass im ersten Betätigungszustand, in welchem die Hinterschneidung (13) gegen die zweite Anschlagfläche (15) stößt, der Kolben (4) eine Durchgangsöffnung zwischen den zwei Kammern (A, B), die vom ersten und vom zweiten beweglichen Körper (6, 7) definiert sind, verschlossen ist und das Fluid in der Lage ist, von einer Kammer zur anderen durch den Zwischenraum (I) zurückzufließen, wohingegen im zweiten Betätigungszustand, in welchem die Hinterschneidung (13) gegen die erste Anschlagfläche (14) stößt, die Durchgangsöffnung zwischen den zwei Kammern (A, B) offen ist und das Fluid in der Lage ist, durch die rohrförmige Struktur des zweiten beweglichen Körpers (7) und durch den Zwischenraum (I) zu fließen.

2. Dämpfer nach Anspruch 1, wobei die äußere Seitenfläche (11) des zweiten beweglichen Körpers (7) im Wesentlichen komplementär zur inneren Oberfläche (12) der Hülse (2) geformt ist und die rohrförmige Struktur des zweiten beweglichen Körpers (7) einen ersten und einen zweiten Einlass (8, 9) aufweist, die einander in Bezug auf die Längsachse (10) des beweglichen Körpers (7) gegenüber liegen und in Fluidverbindung stehen.

3. Dämpfer nach Anspruch 1 oder 2, wobei die rohrförmige Struktur des zweiten beweglichen Körpers (7) einen ersten inneren, hohlen Abschnitt (16), welcher so bemaßt ist, um in der Lage zu sein, um kreuzend die erste Anschlagfläche (14) hinauf aufzunehmen, um an die Hinterschneidung (13) anzustoßen, einen zweiten hohlen Abschnitt (17), welcher einen kleineren Querschnitt als der erste Abschnitt (16) aufweist, um ein Kreuzen durch die erste Anschlagfläche (14) zu verhindern, und einen dritten hohlen Abschnitt (18) umfasst, welcher so bemaßt ist, um in der Lage zu sein, kreuzend die zweite Anschlagfläche (15) hinauf aufzunehmen, um an die Hinterschneidung (13) anzustoßen, wobei der zweite hohle Abschnitt (17) einen Querschnitt aufweist, so dass er ein Kreuzen durch die zweite Anschlagfläche (15) nicht zulässt.

4. Dämpfer nach Anspruch 3, wobei der erste hohle Abschnitt (16) und der dritte hohle Abschnitt (18) des zweiten beweglichen Körpers (7) im Wesentlichen übereinstimmende Quer- und Längsabmessungen aufweisen, wodurch vermieden wird, dass sich der zweite bewegliche Körper (7) im Falle von Belastung verformt.

5. Dämpfer nach jedem beliebigen der vorangehenden Ansprüche, wobei die elastischen Elemente (21) aus zwei gegenüber liegenden Zähnen bestehen, welche durch elastische Arme getragen werden.

6. Dämpfer nach jedem beliebigen der vorangehenden Ansprüche, wobei der zweite Kupplungsabschnitt (23) eine vorbestimmte Anzahl von axialen Nuten (24) aufweist, welche vorgesehen sind, Abschnitte der Durchgangsöffnung im zweiten Betätigungszustand des Kolbens (4) zu definieren.

7. Dämpfer nach jedem beliebigen der vorangehenden Ansprüche, wobei der erste zylindrische Abschnitt (22) einen Sacklochsitz (25) aufweist, welcher so ausgelegt ist, um ohne Behinderung ein abschließendes Ende des Stabs (5) aufzunehmen.

8. Dämpfer nach Anspruch 7, wobei eine ringförmige Nut (5a) am abschließenden Ende des Stabs (5) ausgebildet ist, welche geeignet ist, um in einen entsprechenden ringförmigen Wulst (25a), der im Sacklochsitz (25) des ersten beweglichen Körpers (6) ausgebildet ist, einzuschnappen.

9. Dämpfe nach jedem beliebigen der vorangehenden Ansprüche, wobei die Hülse (2) einen Endabschnitt (27) umfasst, welcher eine innere Fläche mit einem größeren Durchmesser aufweist als der Durchmesser des verbleibenden Teils der Hülse (2), wobei der Kolben (4), wenn er in den Endabschnitt (27) der Hülse (2) gleitet, einen Bewegungswiderstand begegnet, welcher kleiner ist als ein Gleitwiderstand des Kolbens (4) im verbleibenden Teil der Hülse (2).

10. Dämpfer nach jedem beliebigen der vorangehenden Ansprüche, wobei sowohl der erste bewegliche Körper (6) als auch der zweite bewegliche Körper (7) aus Kunststoffmaterial hergestellt sind.

## Revendications

1. Amortisseur comprenant :
- un manchon (2) définissant une cavité de logement (3),
- une tige (5) au moins partiellement logée dans la cavité (3) ;
- un piston (4) supporté par la tige (5) et mobile dans la cavité de logement (3), définissant ainsi deux chambres (A, B) dans le manchon (2) ; et
- au moins un fluide contenu dans le manchon (2) et adapté pour coopérer avec le piston (4) ;
dans lequel ledit piston (4) comprend un premier corps mobile (6) fixé à la tige (5) et un second corps mobile (7) qui peut se déplacer par rapport au premier corps mobile (6) afin de définir des premier et second états de fonctionnement du piston (4) ;
dans lequel le second corps mobile (7) présente une structure tubulaire avec une surface latérale extérieure (11) et une contre-dépouille (13) projetant vers l'intérieur depuis la structure tubulaire ;
dans lequel le premier corps mobile (6) présente des première et seconde surfaces de butée opposées (14, 15) qui coopèrent avec ladite contre-dépouille (13) formée dans le second corps mobile (7) ;
**caractérisé en ce que**
- le premier corps mobile (6) présente un volume radial plus petit que le volume radial du manchon (2) et comprend une première partie cylindrique (22) présentant un diamètre inférieur à celui du manchon (2) et définissant la seconde surface de butée (15), et une seconde partie d'accouplement (23) présentant un nombre prédéterminé d'éléments élastiques (21) destinés à définir la première surface de butée (14), lesdits éléments élastiques (21) étant déformables afin de permettre au premier corps mobile (6) d'être engagé par encliquetage en coulissant à l'intérieur du second corps mobile (7), et
- un inter-espace (I) est défini entre la surface latérale extérieure (11) du second corps mobile (7) et une surface intérieure (12) du manchon (2), de telle sorte que dans le premier état de fonctionnement dans lequel la contre-dépouille (13) bute contre la seconde surface de butée (15), le piston (4) bouche un port de passage entre les deux chambres (A, B), défini par les premier et second corps mobiles (6, 7), et le fluide est capable de retourner d'une chambre à l'autre à travers ledit inter-espace (I), alors que dans le second état de fonctionnement dans lequel la contre-dépouille (13) bute contre la première surface de butée (14), le port de passage entre les deux chambres (A, B) est ouvert et le fluide peut circuler à travers la structure tubulaire du second corps mobile (7) et à travers l'inter-espace (I).

2. Amortisseur selon la revendication 1, dans lequel la surface latérale extérieure (11) du second corps mobile (7) est essentiellement formée de manière complémentaire à la surface intérieure (12) du manchon (2) et la structure tubulaire du second corps mobile (7) présente des première et seconde entrées (8, 9) opposées par rapport à l'axe longitudinal (10) du second corps mobile (7) et en communication fluidique.

3. Amortisseur selon la revendication 1 ou 2, dans lequel la structure tubulaire du second corps mobile (7) comprend une première partie intérieure creuse (16) dimensionnée de manière à pouvoir recevoir en croisement la première surface de butée (14) jusqu'à la butée contre la contre-dépouille (13), une deuxième partie creuse (17) présentant une section plus petite que la première partie (16) pour éviter un croisement par la première surface de butée (14), et une troisième partie creuse (18) dimensionnée de manière à pouvoir recevoir en croisement la seconde surface de butée (15) jusqu'à la butée contre la contre-dépouille (13), la deuxième partie creuse (17) présentant une section transversale telle qu'elle ne permet pas un croisement par la seconde surface de butée (15).

4. Amortisseur selon la revendication 3, dans lequel la première partie intérieure creuse (16) et la troisième partie creuse (18) du second corps mobile (7) présentent des dimensions transversales et longitudinales essentiellement coïncidentes, évitant ainsi au second corps mobile (7) de se déformer en cas de contrainte.

5. Amortisseur selon l'une quelconque des revendications précédentes, dans lequel lesdits éléments élastiques (21) consistent en deux dents opposées portées par des bras élastiques.

6. Amortisseur selon l'une quelconque des revendications précédentes, dans lequel la seconde partie d'accouplement (23) présente un nombre prédéterminé de gorges axiales (24) destinées à définir des parties du port de passage dans le second état de fonctionnement du piston (4).

7. Amortisseur selon l'une quelconque des revendications précédentes, dans lequel la première partie cylindrique (22) présente un logement borgne (25) adapté pour recevoir par un serrage à frottement, une extrémité terminale de la tige (5).

8. Amortisseur selon la revendication 7, dans lequel une gorge annulaire (5a) est formée sur l'extrémité terminale de la tige (5), adaptée pour engager par encliquetage une bordure annulaire respective (25a) formée dans le logement borgne (25) du premier corps mobile (6).

9. Amortisseur selon l'une quelconque des revendications précédentes, dans lequel le manchon (2) comprend une partie d'extrémité (27) présentant une surface intérieure avec un diamètre plus large que le diamètre de la partie restante du manchon (2), le piston (4), lorsqu'il glisse dans ladite partie d'extrémité (27) du manchon (2), rencontre une résistance au mouvement qui est inférieure à une résistance au coulissement du piston (4) dans la partie restante du manchon (2).

10. Amortisseur selon l'une quelconque des revendications précédentes, dans lequel le premier corps mobile (6) et le second corps mobile (7) sont tous deux fabriqués en matériau plastique.
